(19) Europäisches Patentamt / European Patent Office / Office européen des brevets

(11) **EP 2 841 498 B1**

(12) **EUROPÄISCHE PATENTSCHRIFT**


(45) Veröffentlichungstag und Bekanntmachung des Hinweises auf die Patenterteilung:
**29.11.2017 Patentblatt 2017/48**

(21) Anmeldenummer: **13719495.7**

(22) Anmeldetag: **24.04.2013**

(51) Int Cl.:
***C08L 55/02*** (2006.01) ***C08L 69/00*** (2006.01)

(86) Internationale Anmeldenummer:
**PCT/EP2013/058541**

(87) Internationale Veröffentlichungsnummer:
**WO 2013/160373 (31.10.2013 Gazette 2013/44)**


(54) **VERARBEITUNGSSTABILE PC/ABS-ZUSAMMENSETZUNGEN**

PC/ABS COMPOSITIONS WHICH REMAIN STABLE WHEN PROCESSED

COMPOSITIONS DE PC/ABS STABLES AU TRAITEMENT


(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.04.2012 EP 12166034**

(43) Veröffentlichungstag der Anmeldung:
**04.03.2015 Patentblatt 2015/10**



(73) Patentinhaber: **Covestro Deutschland AG**
**51373 Leverkusen (DE)**

(72) Erfinder:
- **SEIDEL, Andreas**
  **41542 Dormagen (DE)**
- **ECKEL, Thomas**
  **41540 Dormagen (DE)**
- **HÄUßLER, Martin**
  **42859 Remscheid (DE)**

(74) Vertreter: **Levpat**
**c/o Covestro AG**
**Gebäude 4825**
**51365 Leverkusen (DE)**



(56) Entgegenhaltungen:
**WO-A1-91/18052**
**JP-B2- 3 255 309**
**US-A1- 2007 021 559**

- **DATABASE CA [Online] CHEMICAL ABSTRACTS SERVICE, COLUMBUS, OHIO, US; CHIBA, TAKASHI ET AL: "Resin compositions having thermal stability and low corrosion to molds", XP002682456, gefunden im STN Database accession no. 122:267009 -& JP 6 263962 A (DENKI KAGAKU KOGYO KK, JAPAN) 20. September 1994 (1994-09-20)**



Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft Formmassen enthaltend Polycarbonat und Acrylnitril-Butadien-Styrol-Polymerisat (ABS) sowie gegebenenfalls weitere Additive und Komponenten, die sich durch eine hohe thermische Verarbeitungsstabilität in Bezug auf Glanzgrad, Polycarbonatabbau und Gehalt an freiem Bisphenol-A auszeichnen und eine verbesserte Spannungsrißbeständigkeit aufweisen.

Thermoplastische Formmassen aus Polycarbonaten und ABS-Polymerisaten sind seit langem bekannt.

DE-A 1 170 141 beschreibt gut verarbeitbare Formmassen aus Polycarbonaten und Pfropfpolymerisaten von Monomermischungen aus Acrylnitril und einem aromatischen Vinylkohlenwasserstoff auf Polybutadien.

In der DE-A 1 810 993 wird die verbesserte Wärmestandfestigkeit von Polycarbonat in Abmischung mit ABS-Pfropfpolymerisaten bzw. Copolymerisaten auf Basis von $\alpha$-Methylstyrol beschrieben.

Gegenstand der DE-A 22 59 565 und DE-A 23 29 548 ist die verbesserte Fließnahtfestigkeit von PC/ABS-Formmassen, wobei in beiden Dokumenten als Bestandteil der ABS-Komponente jeweils Pfropfpolymerisate bestimmter Teilchengröße verwendet werden.

DE-A 28 18 679 beschreibt PC/ABS-Mischungen mit besonders hoher Tieftemperaturzähigkeit, wenn das ABS-Polymerisat zwei Pfropfmischpolymerisate mit unterschiedlichem Pfropfgrad enthält.

Die EP-A 900 827 offenbart schlagzähmodifzierte Polycarbonat-Zusammensetzungen mit verbesserter Thermostabilität enthaltend Emulsionspolymerisate, welche im wesentlichen frei von jeglichen basischen Komponenten sind, die das Polycarbonat abbauen. Gemäß dieser Anmeldung zeigen solche Polycarbonat-Zusammensetzungen, die mit Emulsionspolymerisaten schlagzähmodifiziert sind, die herstellungsbedingt basische Verunreinigungen enthalten, eine mangelhafte Thermostabilität.

US 6,417,256 B1 beschreibt Formmassen enthaltend Polycarbonat und ABS-Pfropfpolymer hergestellt im Lösungspolymersiationsverfahren, welche sich durch exzellente mechanische Eigenschaften und insbesondere verbessertes Spannungsrißverhalten auszeichnen.

EP 1 268 666 B1 und WO 01/25334 A1 beschreiben Formmassen enthaltend Polycarbonat und ABS-Pfropfpolymer hergestellt im Masse-Polymerisationsverfahren, welche sich durch gute Schlagzähigkeit und verbessertes Verarbeitungsverhalten auszeichnen.

WO 01/70884 A1 beschreibt Formmassen enthaltend Polycarbonat und ABS-Pfropfpolymer hergestellt im Masse-Polymerisationsverfahren, welche sich durch reduzierte Anisotropie im Bezug auf die Schlagzähigkeit auszeichnen.

WO 91/18052 A1 offenbart PC/ABS-Formmassen mit hoher thermischer Stabilität, in denen das ABS-Polymer einen Gehalt an Natrium- und Kaliumionen von weniger als 800 ppm aufweist.

WO 99/11713 A1 offenbart flammwidrige PC/ABS-Zusammensetzungen mit verbesserter Feuchtebeständigkeit, in denen das ABS-Polymer einen Alkalimetallgehalt von weniger als 1 ppm aufweist.

In keinem der oben genannten Dokumente wird beschrieben, daß die Zusammensetzungen der vorliegenden Erfindung vorteilhafte Eigenschaften gegenüber den im Stand der Technik bekannten Zusammensetzungen aufweisen.

Die Aufgabe der vorliegenden Erfindung bestand darin, Polycarbonat/ABS-Formmassen bereitzustellen, welche sich durch eine verbesserte Spannungsrißbeständigkeit, einen verarbeitsstabileren hohen Glanzgrad, und vorzugsweise auch einen geringeren thermischen Polycarbonatabbau bei ungünstigen Verarbeitungsbedingungen (hohe Temperatur, hohe Scherung und/oder lange Verweilzeit) und einen reduzierten Gehalt an freiem Bisphenol-A- auch bei verschärften Compoundierungsbedingungen (hohen Temperaturen) auszeichnen.

Der Gegenstand der Erfindung sind somit thermoplastische Formmassen enthaltend

A) 40,0 bis 99,5 Gew.-Teile, vorzugsweise 50,0 bis 95,0 Gew.-Teile, besonders bevorzugt 60,0 bis 90,0 Gew.-Teile mindestens eines aromatischen Polycarbonats oder Polyestercarbonats mit mit einem OH-Endgruppengehalt kleiner als 300 ppm, bevorzugt kleiner als 250 ppm, besonders bevorzugt kleiner als 200 ppm.

B) 0,5 bis 60,0 Gew.-Teile, vorzugsweise 4,5 bis 49,5 Gew.-Teile, besonders bevorzugt 6,0 bis 36,0 Gew.-Teile mindestens eines Pfropfpolymerisats, mit einem Gehalt an Lithium, Natrium, Kalium, Magnesium und Kalzium von in Summe kleiner als 100 ppm, weiter bevorzugt von in Summe kleiner als 50 ppm, besonders bevorzugt von in Summe kleiner als 20 ppm,

C) 0,0 bis 30,0 Gew.-Teile, bevorzugt 0 bis 20,0 Gew.-Teile, besonders bevorzugt 3,0 bis 15,0 Gew.-Teile Vinyl(Co)Polymerisat, bevorzugt hergestellt im Masse- oder Lösungspolymerisationsverfahren,

D) 0,0 bis 40,0 Gew.-Teile, bevorzugt 0,5 bis 20,0 Gew.-Teile, besonders bevorzugt 1,0 bis 10,0 Gew.-Teile weitere Polymeradditive,

wobei die Summe der Gewichtsteile der Komponenten A) bis D) sich zu 100 Gewichtsteilen addiert. Die Komponente A weist einen Gehalt an freiem Bisphenol-A (BPA) kleiner als 20 ppm, bevorzugt kleiner als 15 ppm, und weiter bevorzugt kleiner als 10 ppm.

Vorzugsweise wird Komponente A im Phasengrenzflächenverfahren hergestellt.
Vorzugsweise wird Komponente B im Masse- oder Lösungspolymerisationsverfahren hergestellt.
In einer weiter bevorzugten Ausführungsform sind die erfindungsgemäßen Zusammensetzungen frei von aromatischem Polycarbonat oder Polyestercarbonat, hergestellt im Schmelzepolymerisationsverfahren.
In einer weiter bevorzugten Ausführungsform sind die erfindungsgemäßen Zusammensetzungen frei von Pfropfpolymerisaten, hergestellt im Emulsions- oder Suspensionspolymerisationsverfahren.
In einer weiter bevorzugten Ausführungsform sind die erfindungsgemäßen Zusammensetzungen frei von Vinyl(Co)Polymerisaten, hergestellt im Emulsions- oder Suspensionspolymerisationsverfahren. In einer besonders bevorzugten Ausführungsform sind die erfindungsgemäßen Zusammensetzungen sowohl frei von aromatischem Polycarbonat oder Polyestercarbonat, hergestellt im Schmelzepolymerisationsverfahren als auch frei von Pfropfpolymerisaten und Vinyl(Co)Polymerisaten, hergestellt im Emulsions- oder Suspensionspolymerisationsverfahren.
In einer weiter bevorzugten Ausführungsform ist der Gehalt an freiem Bisphenol-A in der compoundierten Gesamtzusammensetzung kleiner als 20 ppm, vorzugsweise kleiner als 15 ppm, und vorzugsweise größer als 0,5 ppm, weiter bevorzugt größer als 1,0 ppm, besonders bevorzugt größer als 2 ppm.

In einer bevorzugten Ausführungsform besteht die Zusammensetzung aus den Komponenten A bis D.

In einer bevorzugten Ausführungsform ist die Zusammensetzung frei von Komponenten verschieden von Komponente A, die freies Bisphenol-A oder Bisphenol-A-Bausteine enthalten, insbesondere frei von Bisphenol-A basierten Flammschutzmitteln.

In besonders bevorzugter Ausführungsform ist die Zusammensetzung frei von Flammschutzmitteln.

Sofern in der vorliegenden Erfindung nicht anders angegeben wird zur Bestimmung des Gehalts an freiem Bisphenol-A die Probe in Dichlormethan gelöst und mit Methanol umgefällt. Der ausgefallene Polymeranteil wird abfiltriert und die Filtratlösung eingeengt. Der Gehalt an freiem BPA wird in der eingeengten Filtratlösung durch HPLC mit UV-Detektion (externer Standard) bestimmt.

Komponente A

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 007 934).

Die Herstellung aromatischer Polycarbonate gemäß Komponente A erfolgt bevorzugt durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen.

Die als Komponente A erfindungsgemäß geeigneten Polycarbonate weisen eine OH-Endgruppenkonzentration kleiner als 300 ppm, bevorzugt kleiner als 250 ppm, besonders bevorzugt kleiner als 200 ppm auf.

Die Bestimmung der OH-Endgruppenkonzentration erfolgt mittels Infrarotspektroskopie gemäß Horbach, A.; Veiel, U.; Wunderlich, H., Makromolekulare Chemie 1965, Band 88, S.215-231.

Diphenole zur Herstellung der aromatischen Polycarbonate und/oder aromatischen Polyestercarbonate sind vorzugsweise solche der Formel (I)

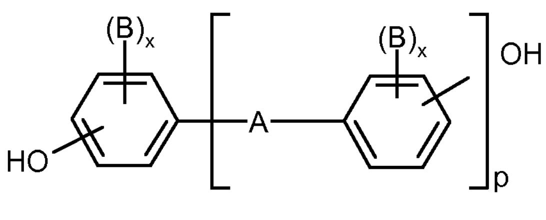

(I),

wobei

A eine Einfachbindung, $C_1$ bis Cs-Alkylen, $C_2$ bis Cs-Alkyliden, $C_5$ bis $C_6$-Cycloalkyliden, -O-, -SO-, -CO-, -S-, $-SO_2-$, $C_6$ bis $C_{12}$-Arylen, an das weitere aromatische gegebenenfalls Heteroatome enthaltende Ringe kondensiert sein können,
oder ein Rest der Formel (II) oder (III)

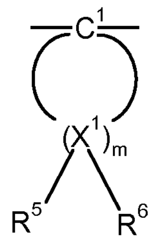

(II)

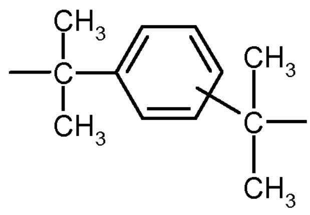

(III)

B jeweils $C_1$ bis $C_{12}$-Alkyl, vorzugsweise Methyl, Halogen, vorzugsweise Chlor und/oder Brom

x jeweils unabhängig voneinander 0, 1 oder 2,

p 1 oder 0 sind, und

$R^5$ und $R^6$ für jedes $X^1$ individuell wählbar, unabhängig voneinander Wasserstoff oder $C_1$ bis $C_6$-Alkyl, vorzugsweise Wasserstoff, Methyl oder Ethyl,

X1 Kohlenstoff und

m eine ganze Zahl von 4 bis 7, bevorzugt 4 oder 5 bedeuten, mit der Maßgabe, dass an mindestens einem Atom $X^1$, $R^5$ und $R^6$ gleichzeitig Alkyl, vorzugsweise Methyl oder Ethyl, sind.

Bevorzugte Diphenole sind Hydrochinon, Resorcin, Dihydroxydiphenole, Bis-(hydroxyphenyl)-$C_1$-$C_5$-alkane, Bis-(hydroxyphenyl)-$C_5$-$C_6$-Cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und $\alpha,\alpha$-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenol oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol%, und 10 Mol%, bezogen auf die Molsumme der jeweils eingesetzten Diphenole.

Die relative Lösungsviskosität ($\eta_{rel}$) der aromatischen Polycarbonate zur Herstellung der Zusammensetzung liegt im Bereich 1,18 bis 1,4, vorzugsweise 1,20 bis 1,32, weiter bevorzugt von 1,23 bis 1,32, besonders bevorzugt 1,26 bis 1,30 (gemessen an Lösungen von 0,5 g Polycarbonat oder Polyestercarbonat in 100 ml Methylenchlorid-Lösung bei 25°C im Ubbelohde-Viskosimeter).

Die thermoplastischen, aromatischen Polycarbonate haben bevorzugt mittlere Gewichtsmittelmolekulargewichte ($M_w$, gemessen durch GPC (Gelpermeationschromatographie mit Polycarbonatstandard) von 10.000 bis 200.000 g/mol, vorzugsweise 15.000 bis 80.000 g/mol, weiter bevorzgut von 23.000 bis 32.000 besonders bevorzugt 26.000 bis

32.000 g/mol.

Die thermoplastischen, aromatischen Polycarbonate können in bekannter Weise verzweigt sein, und zwar vorzugsweise durch den Einbau von 0,05 bis 2,0 Mol%, bezogen auf die Summe der eingesetzten Diphenole, an dreifunktionellen oder mehr als dreifunktionellen Verbindungen, beispielsweise solchen mit drei und mehr phenolischen Gruppen. Bevorzugt werden lineare Polycarbonate, weiter bevorzugt auf Basis von Bisphenol-A, eingesetzt.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Ebenfalls geeignet sind Polydiorganosiloxanhaltige Copolycarbonate; die Herstellung der Polydiorganosiloxanhaltiger Copolycarbonate ist beispielsweise in der DE-A 3 334 782 beschrieben.

Bevorzugte Polycarbonate sind neben den Bisphenol-A-Homopolycarbonaten die Copolycarbonate von Bisphenol-A mit bis zu 15 Mol%, bezogen auf die Molsummen an Diphenolen, anderen als bevorzugt oder besonders bevorzugt genannten Diphenolen.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch $C_1$ bis $C_{22}$-Alkylgruppen oder durch Halogenatome substituiert sein können, sowie aliphatische $C_2$ bis $C_{22}$-Monocarbonsäurechloride in Betracht.

Die Menge an Kettenabbrechern beträgt jeweils 0,1 bis 10 Mol%, bezogen im Falle der phenolischen Kettenabbrecher auf Mol Diphenol und im Falle von Monocarbonsäurechlorid-Kettenabbrecher auf Mol Dicarbonsäuredichlorid.

Bei der Herstellung von aromatischen Polyestercarbonaten kann zusätzlich eine oder mehrere aromatische Hydroxycarbonsäure eingesetzt werden.

Die aromatischen Polyestercarbonate können sowohl linear als auch in bekannter Weise verzweigt sein (siehe dazu DE-A 2 940 024 und DE-A 3 007 934), wobei lineare Polyestercabonate bevorzugt sind.

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbon-säuretetrachlorid oder Pyromellithsäuretetrachlorid, in Mengen von 0,01 bis 1,0 Mol% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol% bezogen auf eingesetzte Diphenole verwendet werden. Phenolische Verzweigungsmittel können mit den Diphenolen vorgelegt werden; Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol%, insbesondere bis zu 80 Mol%, besonders bevorzugt bis zu 50 Mol%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die thermoplastischen, aromatischen Polycarbonate und Polyestercarbonate können allein oder im beliebigen Gemisch eingesetzt werden.

<u>Komponente B</u>

Als Komponente B enthalten die erfindungsgemäßen Zusammensetzungen Pfropfpolymerisate, hergestellt im Emulsions-, Masse-, Lösungs- oder Suspensionspolymerisationsverfahren.

Die als Komponente B geeigneten Pfropfpolymerisate zeichnen sich durch einen Gehalt an Lithium, Natrium, Kalium, Magnesium und Kalzium von in Summe kleiner als 100 ppm, weiter bevorzugt von in Summe kleiner als 50 ppm, besonders bevorzugt von in Summe kleiner als 20 ppm aus.

Der Gehalt an Lithium, Natrium, Kalium, Magnesium und Kalzium wird ermittelt durch optische Emissionsspektrometrie mittels induktiv gekoppeltem Plasma (ICP-OES) mit internem Standard. Hierzu wird die Probe in konzentrierter Salpetersäure in der Mikrowelle bei 200°C und 200bar bar aufgeschlossen, auf 1 M Salpetersäure verdünnt und vermessen.

Bevorzugt kommt in den erfindungsgemäßen Zusammensetzungen als Komponente B ein Pfropfpolymerisat, hergestellt im Masse- oder Lösungspolymersiationsverfahren zum Einsatz.

Hierbei handelt es sich in bevorzugter Ausführungsform um Pfropfpolymerisate von

B1) 5 bis 95 Gew.-%, vorzugsweise 80 bis 93 Gew.-%, besonders bevorzugt 83 bis 92 Gew.-%, ganz besonders bevorzugt 85 bis 91 Gew.-%, bezogen auf die Komponente B, einer Mischung aus

B1.1) 65 bis 85 Gew.-%, bevorzugt 70 bis 80 Gew.-%, bezogen auf die Mischung B.1, mindestens eines Monomeren ausgewählt aus der Gruppe der Vinylaromaten (wie beispielsweise Styrol, $\alpha$-Methylstyrol), kernsubstituierten Vinylaromaten (wie beispielsweise p-Methylstyrol, p-Chlorstyrol) und Methacrylsäure-(C1-C8)-Alkylester (wie beispielsweise Methylmethacrylat, Ethylmethacrylat) und

B1.2) 15 bis 35 Gew.-%, bevorzugt 20 bis 30 Gew.-% bezogen auf die Mischung B1, mindestens eines Monomeren ausgewählt aus der Gruppe der Vinylcyanide (wie beispielsweise ungesättigte Nitrile wie Acrylnitril und Methacrylnitril), (Meth)Acrylsäure-(C1-C8)-Alkylester (wie beispielsweise Methylmethacrylat, n-Butylacrylat, tert.-Butylacrylat) und Derivate (wie beispielsweise Anhydride und Imide) ungesättigter Carbonsäuren (beispielsweise Maleinsäureanhydrid und N-Phenyl-Maleinimid)
auf

B2) 95 bis 5 Gew.-%, vorzugsweise 20 bis 7 Gew.-%, besonders bevorzugt 17 bis 8 Gew.-%, ganz besonders bevorzugt 15 bis 9 Gew.-%, bezogen auf die Komponente B,
wenigstens einer Pfropfgrundlage.

Die Pfropfgrundlage hat vorzugsweise eine Glasübergangstemperatur < 0°C, bevorzugt < -50°C, besonders bevorzugt < -70°C.

Glasübergangstemperaturen werden, soweit in der vorliegenden Erfindung nicht anders angegeben, mittels dynamischer Differenzkalorimetrie (DSC) gemäß der Norm DIN EN 61006 bei einer Heizrate von 10 K/min mit Definition der Tg als Mittelpunkttemperatur (Tangentenmethode) und Stickstoff als Schutzgas bestimmt.

Die Pfropfpartikel in der Komponente B weisen bevorzugt eine mittlere Teilchengröße (D50-Wert) von 0,1 bis 10 $\mu$m, vorzugsweise von 0,2 bis 2 $\mu$m, besonders bevorzugt von 0,3 bis 1,0 $\mu$m, ganz besonders bevorzugt von 0,4 bis 0,8 $\mu$m auf.

Die mittlere Teilchengröße D50 ist der Durchmesser, oberhalb und unterhalb dessen jeweils 50 Gew.-% der Teilchen liegen. Sie wird, soweit in der vorliegenden Anmeldung nicht explizit anders angegeben, mittels Ultrazentrifugenmessung (W. Scholtan, H. Lange, Kolloid, Z. und Z. Polymere 250 (1972), 782-1796) bestimmt.

Bevorzugte Monomere B1.1 sind ausgewählt aus mindestens einem der Monomere Styrol, $\alpha$-Methylstyrol und Methylmethacrylat, bevorzugte Monomere B1.2 sind ausgewählt aus mindestens einem der Monomere Acrylnitril, Maleinsäureanhydrid und Methylmethacrylat.

Besonders bevorzugte Monomere sind B1.1 Styrol und B1.2 Acrylnitril.

Bevorzugte Pfropfgrundlagen B2 sind Dienkautschuke (z.B. auf Basis von Butadien oder Isopren), Dien-Vinyl-Blockcopolymer-Kautschuke (z.B. auf Basis von Butadien- und Styrolblöcken), Copolymerisate von Dienkautschuken mit weiteren copolymerisierbaren Monomeren (z.B. gemäß B1.1 und B1.2) und Mischungen aus den zuvor genannten Kautschuktypen. Besonders bevorzugt als Pfropfgrundlage B2 sind reine Polybutadienkautschuke, Styrol-Butadien-Blockcopolymerkautschuke und Mischungen von Styrol-Butadien-Blockcopolymerkautschuken mit reinem Polybutadienkautschuk.

Der Gelanteil der Pfropfpolymerisate B beträgt vorzugsweise 10 bis 40 Gew.-%, besonders bevorzugt 15 bis 30 Gew.-%, ganz besonders bevorzugt 17 bis 25 Gew.-% (gemessen in Aceton).

Der Gelgehalt der Pfropfpolymerisate wird, soweit in der vorliegenden Erfindung nicht anders angegeben, bei 25°C als in Aceton als Lösungsmittel unlöslicher Anteil bestimmt (M. Hoffmann, H. Krömer, R. Kuhn, Polymeranalytik I und II, Georg Thieme-Verlag, Stuttgart 1977).

Weiter bevorzugte Polymerisate B sind z.B. ABS-Polymerisate hergestellt durch radikalische Polymerisation, welche in bevorzugter Ausführungsform bis zu 10 Gew.-%, besonders bevorzugt bis zu 5 Gew.-%, besonders bevorzugt 2 bis 5 Gew.-%, jeweils bezogen auf das Pfropfpolymerisat B, an n-Butylacrylat enthalten.

Das Pfropfpolymerisat B umfasst im Allgemeinen herstellungsbedingt freies, d.h. nicht chemisch an die Kautschukgrundlage gebundenes Copolymerisat aus B1.1 und B1.2, welches sich dadurch auszeichnet, dass es in geeigneten Lösungsmittel (z.B. Aceton) gelöst werden kann.

Bevorzugt enthält die Komponente B freies Copolymerisat aus B1.1 und B1.2, welches ein gewichtsgemitteltes Molekulargewicht (Mw), bestimmt per Gelpermeationschromatographie mit Polystyrol als Standard, von bevorzugt 50000 bis 200000 g/mol, besonders bevorzugt von 70000 bis 180000 g/mol, besonders bevorzugt von 100000 bis 170000 g/mol aufweist.

Komponente C

Die Komponente C umfasst ein oder mehrere thermoplastische Vinyl(Co)Polymerisate C.

Geeignet sind als Vinyl(Co)Polymerisate C Polymerisate von mindestens einem Monomeren aus der Gruppe der Vinylaromaten, Vinylcyanide (ungesättigte Nitrile), (Meth)Acrylsäure-($C_1$-$C_8$)-Alkylester, ungesättigte Carbonsäuren sowie Derivate (wie Anhydride und Imide) ungesättigter Carbonsäuren. Insbesondere geeignet sind (Co)Polymerisate aus

C.1 50 bis 99, vorzugsweise 70 bis 80 Gew.-Teilen Vinylaromaten und/oder kernsubstituierten Vinylaromaten wie Styrol, $\alpha$-Methylstyrol, p-Methylstyrol, p-Chlorstyrol) und/oder (Meth)Acrylsäure-($C_1$-$C_8$)-Alkylester, wie Methylmethacrylat, Ethylmethacrylat), und

C.2 1 bis 50, vorzugsweise 20 bis 30 Gew.-Teilen Vinylcyanide (ungesättigte Nitrile) wie Acrylnitril und Methacrylnitril und/oder (Meth)Acryl-säure-($C_1$-$C_8$)-Alkylester, wie Methylmeth-acrylat, n-Butylacrylat, t-Butylacrylat, und/oder ungesättigte Carbonsäuren, wie Maleinsäure, und/oder Derivate, wie Anhydride und Imide, ungesättigter Carbonsäuren, beispielsweise Maleinsäureanhydrid und N-Phenylmaleinimid).

Die Vinyl(co)polymerisate C sind harzartig, thermoplastisch und kautschukfrei. Besonders bevorzugt ist das Copolymerisat aus C.1 Styrol und C.2 Acrylnitril.

Die (Co)Polymerisate gemäß C sind bekannt und lassen sich durch radikalische Polymerisation, insbesondere durch Emulsions-, Suspensions-, Lösungs- oder Massepolymerisation, bevorzugt durch Lösungs- oder Massepolymerisation herstellen. Die (Co)Polymerisate besitzen vorzugsweise mittlere Molekulargewichte Mw (Gewichtsmittel, ermittelt durch Lichtstreuung oder Sedimentation) zwischen 15.000 und 200.000 g/mol, besonders bevorzugt von 80.000 bis 150.000 g/mol.

Komponente D

Die Zusammensetzung kann als Komponente D optional weiterhin mindestens ein handelsübliches Polymeradditiv enthalten.
Als handelsübliche Polymeradditive gemäß Komponente D kommen Additive wie beispielsweise Flammschutzmittel (beispielsweise Phosphor- oder Halogenverbindungen), Flammschutzsynergisten (beispielsweise nanoskalige Metalloxide), rauchhemmende Additive (beispielsweise Borsäure oder Borate), Antidrippingmittel (beispielsweise Verbindungen der Substanzklassen der fluorierten Polyolefine, der Silikone sowie Aramidfasern), interne und externe Gleit- und Entformungsmittel (beispielsweise Pentaerythrittetrastearat, Montanwachs oder Polyethylenwax), Fließfähigkeitshilfsmittel (beispielsweise niedermolekulare Vinyl(co)polymerisate), Antistatika (beispielsweise Blockcopolymere aus Ethylenoxid und Propylenoxid, andere Polyether oder Polyhydroxyether, Poletheramide, Polyesteramide oder Sulfonsäuresalze), Leitfähigkeitsadditive (beispielsweise Leitruß oder Carbon Nanotubes), Stabilisatoren (beispielsweise UV/Licht-Stabilisatoren, Thermostabilisatoren, Antioxidantien, Umesterungsinhibitoren, Hydrolyseschutzmittel), antibakteriell wirkende Additive (beispielsweise Silber oder Silbersalze), kratzfestigkeitsverbessernde Additive (beispielsweise Silikonöle oder harte Füllstoffe wie Keramik(hohl)kugeln oder Quarzpulver), IR-Absorbentien, optische Aufheller, fluoreszierende Additive, Füll- und Verstärkungsstoffe (z.B. Talk, gemahlene Glas- oder Karbonfasern, Glas- oder Keramik(hohl)kugeln, Glimmer, Kaolin, $CaCO_3$ und Glasschuppen), Säuren sowie Farbstoffe und Pigmente (beispielsweise Ruß, Titandioxid oder Eisenoxid), oder aber Mischungen mehrerer der genannten Additive in Frage.

Als Komponente D können die erfindungsgemäßen Zusammensetzungen insbesondere auch Flammschutzmittel, beispielsweise halogenierte organische Verbindungen bzw. phosphorhaltige Flammschutzmittel enthalten. Letztgenannte kommen bevorzugt zum Einsatz.

Phosphorhaltige Flammschutzmittel im erfindungsgemäßen Sinne sind bevorzugt ausgewählt aus den Gruppen der mono- und oligomeren Phosphor- und Phosphonsäureester, Phosphonatamine und Phosphazene, wobei auch Mischungen von mehreren Verbindungen ausgewählt aus einer oder verschiedenen dieser Gruppen als Flammschutzmittel zum Einsatz kommen können. Auch andere hier nicht speziell erwähnte halogenfreie Phosphorverbindungen können alleine oder in beliebiger Kombination mit anderen halogenfreien Phosphorverbindungen eingesetzt werden.

Bevorzugte mono- und oligomere Phosphor- bzw. Phosphonsäureester sind Phosphorverbindungen der allgemeinen Formel (IV)

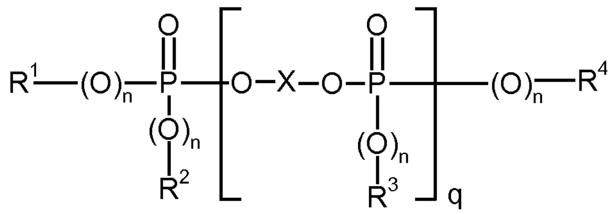

(IV)

worin

R1, R2, R3 und R4, unabhängig voneinander jeweils gegebenenfalls halogeniertes C1 bis C8-Alkyl, jeweils gegebenenfalls durch Alkyl, vorzugsweise C1 bis C4-Alkyl, und/oder Halogen, vorzugsweise Chlor, Brom, substituiertes C5 bis C6-Cycloalkyl, C6 bis C20-Aryl oder C7 bis C12-Aralkyl,

n unabhängig voneinander, 0 oder 1

q 0 bis 30 und

X einen ein- oder mehrkernigen aromatischen Rest mit 6 bis 30 C-Atomen, oder einen linearen oder verzweigten aliphatischen Rest mit 2 bis 30 C-Atomen, der OH-substituiert sein und bis zu 8 Etherbindungen enthalten kann, bedeuten.

Bevorzugt stehen R1, R2, R3 und R4 unabhängig voneinander für C1 bis C4-Alkyl, Phenyl, Naphthyl oder Phenyl-C1-C4-alkyl. Die aromatischen Gruppen R1, R2, R3 und R4 können ihrerseits mit Halogen- und/oder Alkylgruppen, vorzugsweise Chlor, Brom und/oder C1 bis C4-Alkyl substituiert sein. Besonders bevorzugte Aryl-Reste sind Kresyl, Phenyl, Xylenyl, Propylphenyl oder Butylphenyl sowie die entsprechenden bromierten und chlorierten Derivate davon.
X in der Formel (IV) bedeutet bevorzugt einen ein- oder mehrkernigen aromatischen Rest mit 6 bis 30 C-Atomen. Dieser leitet sich bevorzugt von Diphenolen der Formel (I) ab.
n in der Formel (IV) kann, unabhängig voneinander, 0 oder 1 sein, vorzugsweise ist n gleich 1.
q steht für Werte von 0 bis 30. Bei Einsatz von Mischungen verschiedener Komponenten der Formel (IV) können Mischungen vorzugsweise zahlengemittelte q-Werte von 0,3 bis 10, besonders bevorzugt 0,5 bis 10, insbesondere 1,05 bis 1,4 verwendet werden.
X steht besonders bevorzugt für

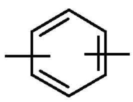 , 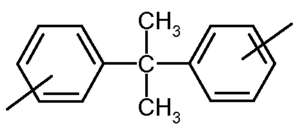 , 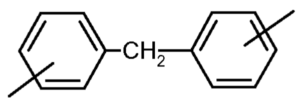 ,

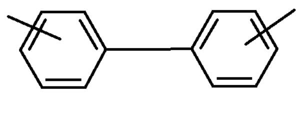

oder deren chlorierte oder bromierte Derivate, insbesondere leitet sich X von Resorcin, Hydrochinon, Bisphenol A oder Diphenylphenol ab. Besonders bevorzugt leitet sich X von Bisphenol A ab.
Der Einsatz von oligomeren Phosphorsäureestern der Formel (IV), die sich vom Bisphenol A ableiten, ist besonders vorteilhaft.
In einer weiter bevorzugten Ausführungsform werden als Additive sterisch gehinderte Phenole und Phosphite oder deren Gemische, Entformungsmittel und Pigmente, vorzugsweise Ruß oder Titandioxid, eingesetzt.
Besonders bevorzugte Formmassen enthalten als Komponente D neben optionalen weiteren Additiven ein Entformungsmittel, besonders bevorzugt Pentaerythrittetrastearat, in 0,1 bis 1,5 Gew.-Teilen, vorzugsweise 0,2 bis 1,0 Gew.-Teile, besonders bevorzugt 0,3 bis 0,8 Gew.-Teilen.
Besonders bevorzugte Formmassen enthalten als Komponente D neben optionalen weiteren Additiven mindestens einen Stabilisator, beispielsweise ausgewählt aus der Gruppe der sterisch gehinderten Phenole, Phosphite sowie Mischungen daraus und besonders bevorzugt Irganox® B900, in 0,01 bis 0,5 Gew.-Teilen, vorzugsweise 0,03 bis 0,4 Gew.-Teile, besonders bevorzugt 0,06 bis 0,3 Gew.-Teilen.
Besonders bevorzugte flammgeschützte Zusammensetzungen enthalten als Komponente D neben optionalen

weiteren Additiven ein fluoriertes Polyolefin in 0,05 bis 5,0 Gew.-Teilen, vorzugsweise 0,1 bis 2,0 Gew.-Teile, besonders bevorzugt 0,3 bis 1,0 Gew.-Teilen.

Weiterhin ist die Kombination aus PTFE, Pentaerythrittetrastearat und Irganox B900 mit einem phosphorbasiertem Flammschutzmittel, als Komponente D) besonders bevorzugt.

Die erfindungsgemäßen Formmassen, enthaltend die Komponenten A bis C und gegebenenfalls weitere Zusätzen D, werden hergestellt, indem man die jeweiligen Bestandteile in bekannter Weise vermischt und bei Temperaturen von 200°C bis 330°C in üblichen Aggregaten wie Innenknetern, Extrudern und Doppelwellenschnecken schmelzcompoundiert oder schmelzextrudiert.

Gegenstand der vorliegenden Erfindung ist somit auch ein Verfahren zur Herstellung von thermoplastischen Formmassen, enthaltend die Komponenten A bis D, die nach erfolgter Vermischung bei Temperaturen von 200 bis 330°C in gebräuchlichen Aggregaten schmelzcompoundiert oder schmelzextrudiert werden.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Die Formmassen der vorliegenden Erfindung können zur Herstellung von Formkörpern jeder Art verwendet werden. Insbesondere können Formkörper durch Spritzguß hergestellt werden. Beispiele für herstellbare Formkörper sind: Gehäuseteile jeder Art, z.B. für Haushaltsgeräte, wie TV- und HiFi-Geräte, Kaffeemaschinen, Mixer, Büromaschinen, wie Monitore oder Drucker, oder Abdeckplatten für den Bausektor und Teile für den Kfz-Sektor. Sie werden außerdem auf dem Gebiet der Elektrotechnik eingesetzt, weil sie sehr gute elektrische Eigenschaften haben.

## Beispiele

### Komponente A-1

Lineares Polycarbonat auf Basis Bisphenol-A, hergestellt im Phasengrenzflächenverfahren, mit einem gewichtsgemittelten Molekulargewicht $\overline{M}_w$ von 27000 g/mol (bestimmt durch GPC in Dichlormethan mit Polycarbonat als Standard), mit einem OH-Endgruppengehalt von 150 ppm und mit einem herstellungsbedingten Gehalt an freiem Bisphenol-A von 3 ppm.

### Komponente A-2

Lineares Polycarbonat auf Basis Bisphenol-A, hergestellt im Schmelzepolymerisationsverfahren, mit einem gewichtsgemittelten Molekulargewicht $M_w$ von 27000 g/mol (bestimmt durch GPC in Dichlormethan mit Polycarbonat als Standard), mit einem OH-Endgruppengehalt von 480 ppm und mit einem herstellungsbedingten Gehalt an freiem Bisphenol-A von 32 ppm.

### Komponente A-3

Komponente A-1 mit 29 ppm, bezogen auf die Komponente A-1, an zusätzlichem freien Bisphenol-A versetzt. Die Komponente A-3 enthält somit in Summe 32 ppm freies Bisphenol-A und denselben OH-Endgruppengehalt wie Komponente A-1.

### Komponente A-4

Komponente A-1 mit 114 ppm, bezogen auf die Komponente A-1, an zusätzlichem freien Bisphenol-A versetzt. Die Komponente A-4 enthält somit in Summe 117 ppm freies Bisphenol-A und denselben OH-Endgruppengehalt wie Komponente A-1.

### Komponente B-1

Pfropfpolymerisat vom ABS-Typ hergestellt im Massepolymersiationsverfahren mit einem A:B:S-Verhältnis von 24:11:65 Gew.-%. Der D50-Wert der Pfropfpartikeldurchmesser bestimmt durch Ultrazentrifugation beträgt 0,8 µm. Die dem Pfropfpolymersiat zugrunde liegende Pfropfgrundlage ist ein reiner Polybutadien-Kautschuk. Der Gelgehalt des Pfropfpolymerisats gemessen in Aceton liegt bei 22 Gew.-%. Das per GPC mit Polystyrol als Standard in Dimethylformamid bei 20°C gemessene gewichtsgemittelte Molekulargewicht $M_w$ des freien, d.h. nicht chemisch an den Kautschuk gebundenen bzw. in den Kautschukpartikeln in für Aceton unlöslicher Form inkludierten SANs beträgt 150 kg/mol. Mittels ICP-OES wurden in diesem Pfropfpolymersiat folgende Alkali- und Erdalkalimetallgehalte ermittelt: Li < 2 ppm, Na < 2 ppm, K < 2 ppm, Mg < 1 ppm und Ca: 4 ppm (wobei Angaben <x bedeuten, dass das Element mit der jeweiligen

Nachweisgrenze des analytischen Verfahrens nicht nachgewiesen werden konnte).

**Komponente B-2**

Präcompound aus 50 Gew.-% eines ABS-Pfropfpolymerisat mit Kern-Schale-Struktur, hergestellt durch Emulsions-Polymerisation von 50 Gew.-%, bezogen auf das ABS-Pfropfpolymerisat einer Mischung aus 23 Gew.-% Acrylnitril und 77 Gew.-% Styrol in Gegenwart von 50 Gew.-% bezogen auf das ABS-Polymerisat eines teilchenförmig vernetzten Polybutadienkautschuks (mittlerer Teilchendurchmesser $d_{50}$ = 0,25 μm) und 50 Gew.-% eines Copolymerisats aus 77 Gew.-% Styrol und 23 Gew.-% Acrylnitril mit einem gewichtsgemittelten Molekulargewicht Mw von 130000 g/mol (bestimmt durch GPC mit Polystyrol als Standard), hergestellt im Massepolymerisationsverfahren. Mittels ICP-OES wurden in diesem Pfropfpolymersiat folgende Alkali- und Erdalkalimetallgehalte ermittelt: Li < 2 ppm, Na: 18 ppm, K: 65 ppm, Mg: 340 ppm und Ca: 8 ppm (wobei Angaben <x bedeuten, dass das Element mit der jeweiligen Nachweisgrenze des analytischen Verfahrens nicht nachgewiesen werden konnte).

**Komponente C-1**

Pentaerythrittetrastearat als Gleit-/Entformungsmittel

**Komponente C-2**

Thermostabilisator, Irganox® B900 (Gemisch aus 80% Irgafos® 168 und 20% Irganox® 1076; BASF AG; Ludwigshafen / Irgafos® 168 (Tris(2,4-di-tert-butyl-phenyl)-phosphit) / Irganox® 1076 (2,6-Di-tert-butyl-4-(octadecanoxycarbonylethyl)phenol)

Herstellung und Prüfung der Formmassen

Auf einem Zweischneckenextruder (ZSK-25) (Fa. Coperion, Werner und Pfleiderer) werden die in Tabelle 1 aufgeführten Einsatzstoffe bei Schmelzetemperaturen, gemessen mit einem Thermoelement an der Extruderdüse, von 260°C, 285°C und 310°C compoundiert und nachfolgend nach Abkühlung in einem Wasserbad granuliert. Die unterschiedlichen Schmelzetemperaturen wurden dabei durch Variation des spezifischen Energieeintrags bei der Compoundierung mittels Variation von Schneckendrehzahl und Durchsatz eingestellt. Die fertigen Granulate werden auf einer Spritzgussmaschine (Fa. Arburg) bei Massetemperaturen von 260°C, 280°C und 320°C und einer Werkzeugtemperatur von jeweils 80°C zu den entsprechenden Probekörpern verarbeitet.Zur Charakterisierung der Eigenschaften der Formmassen wurden folgende Methoden angewandt:

Das **ESC-Verhalten** wurde gemäß ISO 4599 bei Raumtemperatur und einer Randfaserdehnung von 2,4% in Rapsöl an Prüfstäben der Abmessung 80 mm x 10 mm x 4 mm, welche bei einer Massetemperatur von 260°C spritzgegossen wurden, gemessen.

Als Maß für die **Verarbeitungsstabilität** hinsichtlich Polycarbonat-Molekulargewichtsabbau der hergestellten Zusammensetzungen dient die prozentuale Änderung des MVR gemessen nach ISO 1133 bei 260°C und mit einer Stempellast von 5kg bei einer 15-minütigen Exposition der Schmelze unter Luftausschluss bei einer Temperatur von 300°C. Die resultierende Größe ΔMVR(proc.) berechnet sich durch nachstehende Formel.

$$\Delta MVR(proc.) = \frac{MVR(nachSchmelzelagerung) - MVR(vor Lagerung)}{MVR(vor Lagerung)} \bullet 100\%$$

Der **Glanzgrad** wird an Plättchen der Abmessung 60 mm x 40 mm x 2 mm, welche bei einer Schmelzetemperatur von 280°C bzw. 320°C im Spritzguss unter Verwendung eines Werkzeuges mit hochglanzpolierter Oberfläche hergestellt wurden, in Reflexion bei einem Messwinkel von 60° gemäß DIN 67530 gemessen. Als Maß für die Verarbeitungsstabilität des Glanzgrades dient die Glanzgradreduktion bei Anhebung der Verarbeitungstemperatur im Spritzguss von 280°C auf 320°C in Prozent.

An den Granulaten der bei einer Schmelzetemperatur, gemessen mit einem Thermoelement an der Extruderdüse, von 285°C und 310°C compoundierten Formmassen wurde der Gehalt an freiem Bisphenol-A ermittelt.

Die folgenden Beispiele dienen der weiteren Erläuterung der Erfindung.

**Tabelle 1:** Zusammensetzung und Eigenschaften der Formmassen

| | **1** | **V1** | **V2** | **V3** | **2** | **3** |
|---|---|---|---|---|---|---|
| A1 | 70 | 70 | - | - | - | - |
| A2 | - | - | 70 | 70 | - | - |
| A3 | - | - | - | - | 70 | - |
| A4 | - | - | - | - | - | 70 |
| B1 | 30 | - | 30 | - | 30 | 30 |
| B2 | - | 30 | - | 30 | - | - |
| C1 | 0,5 | 0,5 | 0,5 | 0,5 | 0,5 | 0,5 |
| C2 | 0,1 | 0,1 | 0,1 | 0,1 | 0,1 | 0,1 |
| **Eigenschaften** | | | | | | |
| BPA-Gehalt(Compound.temp.285°C) | 11 | 25 | 69 | 72 | n.g. | n.g. |
| BPA-Gehalt (Compound.temp. 310°C) | 11 | 45 | 93 | 90 | n.g. | n.g. |
| Anstieg BPA-Gehalt (285→310°C) | 0% | 80% | 35% | 25% | n.g. | n.g. |
| ESC (Rapsöl, Zeit bis Bruch) [h] | 19 | 2,3 | 3,3 | 1,2 | n.g. | n.g. |
| Glanzgrad (60°); Spritzguss bei 280°C | 98 | 90 | 97 | 85 | 99 | 98 |
| Glanzgrad (60°); Spritzguss bei 320°C | 94 | 55 | 80 | 56 | 94 | 96 |
| Glanzgradreduktion (280→320°C) | 4% | 39% | 18% | 34% | 3% | 2% |
| deltaMVR(300°C/15min) [%] | 51% | 132% | 70% | 260% | 152% | 262% |
| n.g. = nicht gemessen | | | | | | |

Den Beispielen 1 bis 3 und den Vergleichsbeispielen V1 bis V3 in Tabelle 1 ist zu entnehmen, dass nur die erfindungsgemäßen Zusammensetzungen gemäß Beispielen 1 bis 3, welche einerseits ein Polycarbonat mit geringem OH-Endgruppengehalt und andererseits ein ABS-Pfropfpolymersiat mit geringem Gehalt an Lithium, Natrium, Kalium, Magnesium und Kalzium enthalten, das gewünschte Eigenschaftsprofil aufweisen.

Beispiele 2 und 3, die sich von Beispiel 1 nur durch einen höheren Gehalt an freiem Bisphenol-A in der Polycarbonatkomponente unterscheiden, weisen ebenfalls eine gute Verarbeitungsstabilität im Hinblick auf Glanzgraderhalt bei Erhöhung der Verarbeitungstemperatur, aber eine schlechtere Verarbeitungsstabilität im Hinblick auf Polycarbonat-Abbau auf.

Vergleichsbeispiel 1 enthaltend Polycarbonat mit geringem OH-Endgruppengehalt sowie ein ABS-Pfropfpolymersiat mit hohem Gehalt an Lithium, Natrium, Kalium, Magnesium und Kalzium weist ein deutlich schlechteres ESC-Verhalten sowie eine schlechtere Verarbeitungsstabilität im Hinblick auf Glanzgrad, Polycarbonat-Abbau und Bisphenol-A-Restgehalt auf.

Vergleichsbeispiel 2 enthaltend Polycarbonat mit hohem OH-Endgruppengehalt als auch mit höherem Gehalt an freiem Bisphenol-A und ein ABS-Pfropfpolymersiat mit niedrigem Gehalt an Lithium, Natrium, Kalium, Magnesium und Kalzium weist ebenfalls deutlich schlechteres ESC-Verhalten sowie eine schlechtere Verarbeitungsstabilität im Hinblick auf Glanzgrad, Polycarbonat-Abbau und Bisphenol-A-Restgehalt auf.

Vergleichsbeispiel 3 enthaltend sowohl Polycarbonat mit hohem OH-Endgruppengehalt als auch mit höherem Gehalt an freiem Bisphenol-A als auch ein ABS-Pfropfpolymersiat mit hohem Gehalt an Lithium, Natrium, Kalium, Magnesium und Kalzium weist ebenfalls deutlich schlechteres ESC-Verhalten sowie eine schlechtere Verarbeitungsstabilität im Hinblick auf Glanzgrad, insbesondere Polycarbonat-Abbau und Bisphenol-A-Restgehalt auf.

## Patentansprüche

1. Thermoplastische Formmassen enthaltend

   A) 40,0 bis 99,5 Gew.-Teile mindestens eines aromatischen Polycarbonats oder Polyestercarbonats mit einem

OH-Endgruppengehalt kleiner als 300 ppm und einem Gehalt an freiem Bisphenol-A kleiner als 20 ppm,
B) 0,5 bis 60,0 Gew.-Teile mindestens eines Pfropfpolymerisats, mit einem Gehalt an Lithium, Natrium, Kalium, Magnesium und Kalzium von in Summe kleiner als 100 ppm,
C) 0,0 bis 30,0 Gew.-Teile harzartiges, thermoplastisches und kautschukfreies Vinyl(Co)Polymerisat,
D) 0,0 bis 40,0 Gew.-Teile weitere übliche Polymeradditive ausgewählt aus der Gruppe bestehend aus Flammschutzmitteln, Flammschutzsynergisten, rauchhemmenden Additiven, Antidrippingmitteln, internen und externen Gleit- und Entformungsmitteln, von Komponente C verschiedenen Fließfähigkeitshilfsmitteln, Antistatika, Leitfähigkeitsadditiven, UV-Stabilisatoren, Licht-Stabilisatoren, Thermostabilisatoren, Antioxidantien, Umesterungsinhibitoren, Hydrolyseschutzmittel, antibakteriell wirkenden Additiven, kratzfestigkeitsverbessernden Additiven, IR-Absorbentien, optischen Aufhellern, fluoreszierenden Additiven, Füll- und Verstärkungsstoffen, Säuren sowie Farbstoffen und Pigmenten,

wobei die Summe der Gewichtsteile der Komponenten A) bis D) sich zu 100 Gewichtsteilen addiert.

**2.** Formmasse nach Anspruch 1, **dadurch gekennzeichnet, daß** Komponente A im Phasengrenzflächenverfahren hergestellt ist.

**3.** Formmasse nach einem der vorhergehenden Ansprüche, **dadurch gekennzeichnet, daß** Komponente B ein Pfropfpolymerisate von

B1) 80 bis 93 Gew.-%, bezogen auf die Komponente B, einer Mischung aus
B1.1) 70 bis 80 Gew.-%, bezogen auf die Mischung B1, mindestens eines Monomeren ausgewählt aus der Gruppe der Vinylaromaten, kernsubstituierten Vinylaromaten und Methacrylsäure-(C1-C8)-Alkylester und
B1.2) 20 bis 30 Gew.-% bezogen auf die Mischung B1, mindestens eines Monomeren ausgewählt aus der Gruppe der Vinylcyanide, (Meth)Acrylsäure-(C1-C8)-Alkylester und Derivate ungesättigter Carbonsäuren
auf
B2) 20 bis 7 Gew.-%, bezogen auf die Komponente B,
wenigstens einer Pfropfgrundlage mit einer Glasübergangstemperatur < -50 °C.

**4.** Formmasse nach einem der vorhergehenden Ansprüche, **dadurch gekennzeichnet, daß** Komponente B im Masse- oder Lösungspolymerisationsverfahren hergestellt ist.

**5.** Formmasse nach einem der vorhergehenden Ansprüche, **dadurch gekennzeichnet, daß** die Zusammensetzung frei ist von im Schmelzepolymerisationsverfahren hergestellten aromatischem Polycarbonat oder Polyestercarbonat.

**6.** Formmasse nach einem der vorhergehenden Ansprüche, **dadurch gekennzeichnet, daß** die Zusammensetzung frei ist von im Emulsions- oder Suspensionspolymerisationsverfahren hergestellten Pfropfpolymerisaten und Vinyl(Co)Polymerisaten.

**7.** Formmasse nach einem der vorhergehenden Ansprüche, **dadurch gekennzeichnet, daß** Komponente A einen OH-Endgruppengehalt kleiner als 200 ppm aufweist.

**8.** Formmasse nach einem der vorhergehenden Ansprüche, **dadurch gekennzeichnet, daß** Komponente B einen Gehalt an Lithium, Natrium, Kalium, Magnesium und Kalzium von in Summe kleiner als 20 ppm aufweist.

**9.** Formmasse nach einem der vorhergehenden Ansprüche, **dadurch gekennzeichnet, daß** Komponente A einen Gehalt an freiem Bisphenol-A von kleiner als 10 ppm aufweist.

**10.** Formmasse nach einem der vorhergehenden Ansprüche, **dadurch gekennzeichnet, daß** der Gehalt an freiem Bisphenol-A in der compoundierten Gesamtzusammensetzung kleiner als 20 ppm und größer als 0,5 ppm ist.

**11.** Formmasse nach einem der vorhergehenden Ansprüche, enthaltend

A) 50,0 bis 95,0 Gew.-Teile mindestens eines aromatischen Polycarbonats oder Polyestercarbonats mit einem OH-Endgruppengehalt kleiner als 300 ppm und einem Gehalt an freiem Bisphenol A von kleiner als 20 ppm,
B) 4,5 bis 49,5 Gew.-Teile mindestens eines Pfropfpolymerisats, mit einem Gehalt an Lithium, Natrium, Kalium, Magnesium und Kalzium von in Summe kleiner als 100 ppm,
C) 0,0 bis 20,0 Gew.-Teile harzartiges, thermoplastisches und kautschukfreies Vinyl(Co)Polymerisat,

D) 0,5 bis 20,0 Gew.-Teile der weiteren üblichen Polymeradditiven.

**12.** Formmasse nach einem der vorhergehenden Ansprüche, enthaltend

A) 60,0 bis 90,0 Gew.-Teile mindestens eines aromatischen Polycarbonats oder Polyestercarbonats mit einem OH-Endgruppengehalt kleiner als 300 ppm und einem Gehalt an freiem Bisphenol-A kleiner als 20 ppm,
B) 6,0 bis 36,0 Gew.-Teile mindestens eines Pfropfpolymerisats, mit einem Gehalt an Lithium, Natrium, Kalium, Magnesium und Kalzium von in Summe kleiner als 100 ppm,
C) 3,0 bis 15,0 Gew.-Teile harzartiges, thermoplastisches und kautschukfreies Vinyl(Co)Polymerisat,
D) 1,0 bis 10,0 Gew.-Teile der weiteren üblichen Polymeradditiven.

**13.** Formmasse nach einem der vorhergehenden Ansprüche, **dadurch gekennzeichnet, daß** die Komponente A ein mittleres Gewichtsmittelmolekulargewicht $M_w$ von 26.000 bis 32.000 g/mol aufweist.

**14.** Formmasse nach einem der vorherigen Ansprüche, **dadurch gekennzeichnet, dass** die Komponente C ein mittleres Gewichtsmittelmolekulargewicht $M_w$ von 15000 bis 200000 g/mol aufweist.

## Claims

**1.** Thermoplastic molding compositions comprising

A) from 40.0 to 99.5 parts by weight of at least one aromatic polycarbonate or polyester carbonate with less than 300 ppm OH end group content, and less than 20 ppm content of free bisphenol A,
B) from 0.5 to 60.0 parts by weight of at least one graft polymer with less than 100 ppm total content of lithium, sodium, potassium, magnesium, and calcium,
C) from 0.0 to 30.0 parts by weight of resin-like, thermoplastic, and rubber-free vinyl (co)polymer,
D) from 0.0 to 40.0 parts by weight of other conventional polymer additives selected from the group consisting of flame retardants, flame retardant synergistics, smoke-suppressing additives, antidripping agents, internal and external lubricants and mold-release agents, flowability aids differing from component C, antistatic agents, conductivity additives, UV stabilizers, light stabilizers, heat stabilizers, antioxidants, transesterification inhibitors, hydrolysis stabilizers, antibacterial additives, additives that improve scratch resistance, IR absorbers, optical brighteners, fluorescent additives, fillers and reinforcing materials, acids, and also dyes and pigments,

where the sum of the parts by weight of components A) to D) is 100 parts by weight.

**2.** Molding composition according to Claim 1, **characterized in that** component A has been produced by the interfacial process.

**3.** Molding composition according to either of the preceding claims, **characterized in that** component B is a graft polymer of

B1) from 80 to 93% by weight, based on component B, of a mixture of
B1.1) from 70 to 80% by weight, based on the mixture B1, of at least one monomer selected from the group of the vinylaromatics, ring-substituted vinylaromatics, and ($C_1$-$C_8$)-alkyl methacrylates, and
B1.2) from 20 to 30% by weight, based on the mixture B1, of at least one monomer selected from the group of the vinyl cyanides, ($C_1$-$C_8$)-alkyl (meth)acrylates, and derivatives of unsaturated carboxylic acids
on
B2) from 20 to 7% by weight, based on component B,

of at least one graft base with glass transition temperature < -50°C.

**4.** Molding composition according to any of the preceding claims, **characterized in that** component B has been produced by the bulk or solution polymerization process.

**5.** Molding composition according to any of the preceding claims, **characterized in that** the composition is free from aromatic polycarbonate or polyester carbonate produced by the melt polymerization process.

6. Molding composition according to any of the preceding claims, **characterized in that** the composition is free from graft polymers and vinyl (co)polymers produced by the emulsion or suspension polymerization process.

7. Molding composition according to any of the preceding claims, **characterized in that** the OH end group content of component A is less than 200 ppm.

8. Molding composition according to any of the preceding claims, **characterized in that** component B has less than 20 ppm total content of lithium, sodium, potassium, magnesium, and calcium.

9. Molding composition according to any of the preceding claims, **characterized in that** component A has less than 10 ppm content of free bisphenol A.

10. Molding composition according to any of the preceding claims, **characterized in that** the entire compounded composition has less than 20 ppm, and more than 0.5 ppm, content of free bisphenol A.

11. Molding composition according to any of the preceding claims, comprising

A) from 50.0 to 95.0 parts by weight of at least one aromatic polycarbonate or polyester carbonate with less than 300 ppm OH end group content and less than 20 ppm content of free bisphenol A,
B) from 4.5 to 49.5 parts by weight of at least one graft polymer with less than 100 ppm total content of lithium, sodium, potassium, magnesium, and calcium,
C) from 0.0 to 20.0 parts by weight of resin-like, thermoplastic, and rubber-free vinyl (co)polymer,
D) from 0.5 to 20.0 parts by weight of the other conventional polymer additives.

12. Molding composition according to any of the preceding claims, comprising

A) from 60.0 to 90.0 parts by weight of at least one aromatic polycarbonate or polyester carbonate with less than 300 ppm OH end group content and less than 20 ppm content of free bisphenol A,
B) from 6.0 to 36.0 parts by weight of at least one graft polymer with less than 100 ppm total content of lithium, sodium, potassium, magnesium, and calcium,
C) from 3.0 to 15.0 parts by weight of resin-like, thermoplastic, and rubber free vinyl (co)polymer,
D) from 1.0 to 10.0 parts by weight of the other conventional polymer additives.

13. Molding composition according to any of the preceding claims, **characterized in that** the weight-average molar mass $M_w$ of component A is from 26 000 to 32 000 g/mol.

14. Molding composition according to any of the preceding claims, **characterized in that** the weight-average molar mass $M_w$ of component C is from 15 000 to 200 000 g/mol.

## Revendications

1. Matériaux de moulage thermoplastiques, contenant :

A) 40,0 à 99,5 parties en poids d'au moins un polycarbonate ou polyester-carbonate aromatique ayant une teneur en groupes terminaux OH inférieure à 300 ppm et une teneur en bisphénol A libre inférieure à 20 ppm,
B) 0,5 à 60,0 parties en poids d'au moins un polymère greffé, ayant une teneur totale en lithium, sodium, potassium, magnésium et calcium inférieure à 100 ppm,
C) 0,0 à 30,0 parties en poids d'un (co)polymère de vinyle résineux, thermoplastique et sans caoutchouc,
D) 0,0 à 40,0 parties en poids d'autres additifs usuels pour les polymères choisis dans le groupe constitué par les agents ignifuges, les synergistes ignifuges, les additifs de suppression des fumées, les agents anti-égouttement, les agents lubrifiants et démoulants internes et externes, les adjuvants d'écoulement différents du composant C, les antistatiques, les additifs de conductivité, les stabilisateurs UV, les photostabilisateurs, les thermostabilisateurs, les antioxydants, les inhibiteurs de transestérification, les agents de protection contre l'hydrolyse, les additifs à effet antibactérien, les additifs améliorant la résistance aux éraflures, les absorbants d'IR, les azurants optiques, les additifs fluorescents, les charges et les matières de renforcement, les acides, ainsi que les colorants et les pigments,

la somme des parties en poids des composants A) à D) étant de 100 parties en poids.

2. Matériau de moulage selon la revendication 1, **caractérisé en ce que** le composant A est fabriqué par un procédé à l'interface de phases.

3. Matériau de moulage selon l'une quelconque des revendications précédentes, **caractérisé en ce que** le composant B est un polymère greffé de

   B1) 80 à 93 % en poids, par rapport au composant B, d'un mélange de
   B1.1) 70 à 80 % en poids, par rapport au mélange B1, d'au moins un monomère choisi dans le groupe constitué par les composés aromatiques de vinyle, les composés aromatiques de vinyle à noyau substitué et les esters alkyliques en (C1-C8) de l'acide méthacrylique, et
   B1.2) 20 à 30 % en poids, par rapport au mélange B1, d'au moins un monomère choisi dans le groupe constitué par les cyanures de vinyle, les esters alkyliques en (C1-C8) de l'acide (méth)acrylique et les dérivés d'acides carboxyliques insaturés,
   sur
   B2) 20 à 7 % en poids, par rapport au composant B, d'au moins une base de greffage ayant une température de transition vitreuse < -50 °C.

4. Matériau de moulage selon l'une quelconque des revendications précédentes, **caractérisé en ce que** le composant B est fabriqué par un procédé de polymérisation en masse ou en solution.

5. Matériau de moulage selon l'une quelconque des revendications précédentes, **caractérisé en ce que** la composition est exempte de polycarbonate ou polyester-carbonate aromatique fabriqué par un procédé de polymérisation en masse fondue.

6. Matériau de moulage selon l'une quelconque des revendications précédentes, **caractérisé en ce que** la composition est exempte de polymères greffés et de (co)polymères de vinyle fabriqués par un procédé de polymérisation en émulsion ou en suspension.

7. Matériau de moulage selon l'une quelconque des revendications précédentes, **caractérisé en ce que** le composant A présente une teneur en groupes terminaux OH inférieure à 200 ppm.

8. Matériau de moulage selon l'une quelconque des revendications précédentes, **caractérisé en ce que** le composant B présente une teneur totale en lithium, sodium, potassium, magnésium et calcium inférieure à 20 ppm.

9. Matériau de moulage selon l'une quelconque des revendications précédentes, **caractérisé en ce que** le composant A présente une teneur en bisphénol A libre inférieure à 10 ppm.

10. Matériau de moulage selon l'une quelconque des revendications précédentes, **caractérisé en ce que** la teneur en bisphénol A libre dans la composition totale mélangée est inférieure à 20 ppm et supérieure à 0,5 ppm.

11. Matériau de moulage selon l'une quelconque des revendications précédentes, contenant :

   A) 50,0 à 95,0 parties en poids d'au moins un polycarbonate ou polyester-carbonate aromatique ayant une teneur en groupes terminaux OH inférieure à 300 ppm et une teneur en bisphénol A libre inférieure à 20 ppm,
   B) 4,5 à 49,5 parties en poids d'au moins un polymère greffé, ayant une teneur totale en lithium, sodium, potassium, magnésium et calcium inférieure à 100 ppm,
   C) 0,0 à 20,0 parties en poids d'un (co)polymère de vinyle résineux, thermoplastique et sans caoutchouc,
   D) 0,5 à 20,0 parties en poids des autres additifs usuels pour les polymères.

12. Matériau de moulage selon l'une quelconque des revendications précédentes, contenant :

   A) 60,0 à 90,0 parties en poids d'au moins un polycarbonate ou polyester-carbonate aromatique ayant une teneur en groupes terminaux OH inférieure à 300 ppm et une teneur en bisphénol A libre inférieure à 20 ppm,
   B) 6,0 à 36,0 parties en poids d'au moins un polymère greffé, ayant une teneur totale en lithium, sodium, potassium, magnésium et calcium inférieure à 100 ppm,
   C) 3,0 à 15,0 parties en poids d'un (co)polymère de vinyle résineux, thermoplastique et sans caoutchouc,

D) 1,0 à 10,0 parties en poids des autres additifs usuels pour les polymères.

**13.** Matériau de moulage selon l'une quelconque des revendications précédentes, **caractérisé en ce que** le composant A présente un poids moléculaire moyen en poids $M_w$ de 26 000 à 32 000 g/mol.

**14.** Matériau de moulage selon l'une quelconque des revendications précédentes, **caractérisé en ce que** le composant C présente un poids moléculaire moyen en poids $M_w$ de 15 000 à 200 000 g/mol.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 1170141 A
- DE 1810993 A
- DE 2259565 A
- DE 2329548 A
- DE 2818679 A
- EP 900827 A
- US 6417256 B1
- EP 1268666 B1
- WO 0125334 A1
- WO 0170884 A1
- WO 9118052 A1
- WO 9911713 A1
- DE S1495626 A
- DE 2232877 A
- DE 2703376 A
- DE 2714544 A
- DE 3000610 A
- DE 3832396 A
- DE 3007934 A
- DE 2842005 A
- US 3419634 A
- DE 3334782 A
- DE 2940024 A


### In der Beschreibung aufgeführte Nicht-Patentliteratur


- Herstellung aromatischer Polycarbonate siehe beispielsweise Schnell. Chemistry and Physics of Polycarbonates. Interscience Publishers, 1964
- **HORBACH, A. ; VEIEL, U. ; WUNDERLICH, H.** *Makromolekulare Chemie,* 1965, vol. 88, 215-231
- **W. SCHOLTAN ; H. LANGE ; KOLLOID, Z.** *Z. Polymere,* 1972, vol. 250, 782-1796
- **M. HOFFMANN ; H. KRÖMER ; R. KUHN.** Polymeranalytik. Georg Thieme-Verlag, 1977, vol. I und II